# EUROPEAN PATENT SPECIFICATION

(11) **EP 0 656 972 B1**
(45) Date of publication and mention of the grant of the patent: **25.03.1998**
(21) Application number: 93918004.8
(22) Date of filing: 11.08.1993
(51) Int. Cl.: E01C 13/00

(54) **RECREATIONAL SURFACE**
SPIEL UND SPORTPLATZBELAG
SURFACE DE SPORT

(30) Priority: 18.08.1992 GB 9217535
(43) Date of publication of application: 14.06.1995
(73) Proprietor: BOWERS, Jacqueline Mary, Nicosia (CY); BOWERS, Frank, Nicosia (CY)
(72) Inventor: BOWERS, Frank, Nicosia (CY)
(74) Representative: Watson, Anthony Stephen
(86) International application number: GB9301706
(87) International publication number: WO9404755

(56) References cited:
- WO-A-92/13138
- GB-A- 2 246 077

## Description

This invention concerns a recreational surface for games such as soccer, hockey and American Football for example and also horse-racing tracks for example as is described by WO-A-9 213 138, according to the preamble of claim 1.

The conventional surface for such activities as mentioned above is turf. Normal turf, whilst highly satisfactory under ideal conditions does have some serious disadvantages. In dry seasons or times of drought it can become very hard with risk of injury to falling players. In wet seasons it can become waterlogged making it unpleasant to use and very susceptible to damage. In very cold conditions it can become frozen and again hard and injurious.

Ideally, a recreational surface for these purposes should be compliant under all conditions.

It is an object of the present invention to provide a recreational surface of grass which overcomes the problems associated with conventional turf.

According to the present invention a recreational surface comprises grass growing on a coherent substrate of bonded rubber crumb having substantial voidage therein, said coherent substrate lying between a layer of planting medium on top of said coherent substrate and a layer of root zone sand lying below said coherent substrate, wherein the voidage in the coherent substrate is filled with root zone growing medium with the roots of the grass penetrating said root zone growing medium, characterised in that the size of the rubber crumb is greater than 8 mm and not more than 20 mm in order to more efficiently hydraulically connect said root zone and said planting zone.

The root zone growing medium may comprise sand, loam, peat, other organic material or mixtures thereof.

The layer of planting medium is preferably particulate material and up to 5cm in thickness.

The planting medium may consist of a commercial root zone/ top dressing mixture or an appropriate blend of sandy loam topsoil and root zone sand.

For guidance, a mixture of sand and loamy soil should produce the following sieve analysis to British Standard BS 1377:75:-

| Sieve size (mm) | % by mass passing |
|---|---|
| 2.0 | 98-100 |
| 1.0 | 95-100 |
| 0.5 | 65-100 |
| 0.125 | 10-100 |
| 0.163 | 2-5 |

The organic matter content should be in the range 1-4% and typically 2%.

The crumb may be of SBR, EPDM, natural rubber or mixtures thereof, and may be comprised by recycled vehicle tyres or perimeter seals.

The binder may be a polyurethane resin.

The grass may be grown from seed sown onto the substrate or topping or provided by turves laid on the substrate.

The grass will be selected in accordance with intended use and may be a perennial rye-grass for soccer or fescue for golf, for example.

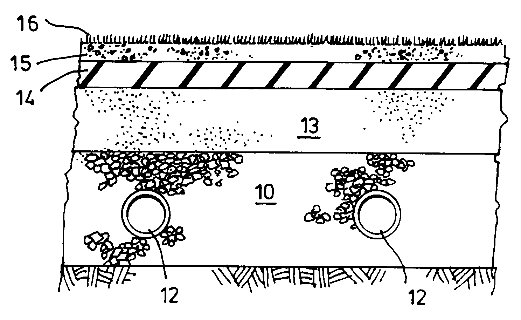

The invention will be further apparent from the following desription, which concerns by way of example only, the preparation of one form of recreational surface embodying same, and with reference to the accompanying drawing which shows a cross-section therethrough.

An area of land is treated to destroy any plant seeds therein and covered with a layer 10 of graded crushed stone which may incorporate land drains 12 if required. The layer 10 is blinded with blinding sand. A layer 13 of root zone sand to a depth of 200cm is then spread over the layer 10. A layer 14 of rubber crumb bonded together by polyurethane to a depth of 25mm or thereabouts is then put down. This layer is formed by mixing the rubber crumb with a liquid polymer and laying before polymerisation is complete, to join the crumbs into a coherent mass having substantial voidage therein.

The crumb may be of a mixture of Styrene Butadiene Rubber (SBR) and natural rubber derived from vehicle tyres and will have sizes in the range of greater than 8 mm and not more than 10 mm.

The voidage in the compliant mass is then filled with a root zone growing medium comprising a mixture of sand and loam.

The root zone growing medium is introduced into the interstices by spraying in the form of a slurry or by brushing or with the aid of vibration.

A layer 15 of commercial root zone/top dressing forming a planting medium is then spread over the layer of rubber crumb to a depth of 2cm or thereabouts.

The planting medium is then sown with a suitable grass seed such as a perennial rye-grass typically Master, Trubadour or Barclay.

The seed is allowed to germinate and the grass 16 is grown to maturity such that its roots penetrate the root zone growing medium in the interstices of the layer of rubber crumb before the surface is brought into use.

It will be understood that the surface remains compliant under all weather conditions on account of the resilience of the substrate.

It is anticipated that the grass surface will be 'self-healing' in that even quite serious surface damage will be confined to the sand layer and not destroy the root matrix within the rubber crumb.

It will be appreciated that it is not intended to limit the invention to the above example only, many variations, such as might readily occur to one skilled in the art, being possible, without departing from the scope thereof.

Thus grass seed may be sown onto the surface of the rubber crumb and a sand dressing applied after germination.

Again, conventional turves may be laid onto the substrate and the turves may then be top-dressed with sand, or other particulate material.

Yet again, the grass and compliant substrate may be presented as tile-like units for laying for instant use, for example indoors or for repair of a damaged area such as a golf teeing ground or goal mouth area.

## Claims

1. A recreational surface comprising grass (16) growing on a coherent substrate (14) of bonded rubber crumb having substantial voidage therein, said coherent substrate (14) lying between a layer (15) of a planting medium on top of said coherent substrate (14) and a layer (13) of root zone sand lying below said coherent substrate, wherein the voidage in the coherent substrate (14) is filled with root zone growing medium with the roots of the grass penetrating said root zone growing medium, characterised in that the size of the rubber crumb is greater than 8 mm and not more than 20 mm in order to more efficiently hydraulically connect the root zone and the planting zone.

2. A recreational surface according to Claim 1, characterised in that the root zone growing medium comprises sand, loam, peat or other organic material or mixtures thereof.

3. A recreational surface according to Claim 1 or Claim 2, characterised in that the layer of planting medium is a particulate material of up to 5cm thickness.

4. A recreational surface according to any of Claims 1 1 to 3, characterised in that the coherent substrate (14) is in a layer having a thickness of between 5mm and 50mm.

5. A recreational surface according to any of Claims 1 to 4, characterised in that the rubber crumb of said coherent substrate (14) is of SBR, EPDM, natural rubber or mixtures thereof.

6. A recreational surface according to any preceding Claim, characterised in that the grass is grown from seed.

7. A recreational surface according to any of Claims 1 to 5, characterised in that the grass is provided by turves.

8. A recreational surface according to Claim 3, characterised in that the particulate planting medium comprises a commercial root zone/top dressing mixture or a blend of sandy loam topsoil and root zone sand.

9. A recreational surface according to any preceding Claim, characterised in that the surface is in the form of tile-like units which can be lifted and laid as required.

## Patentansprüche

1. Freizeitfläche, umfassend Gras (16), das auf einem zusammenhängenden Substrat (14) aus gebundener Kautschukkrume mit einem wesentlichen Hohlraumanteil darin wächst, wobei das genannte zusammenhängende Substrat (14) zwischen einer auf der Oberseite des genannten zusammenhängenden Substrats (14) befindlichen Schicht (15) aus einem Pflanzmittel und einer unterhalb des genannten zusammenhängenden Substrats befindlichen Schicht (13) aus Wurzelzonensand liegt, wobei der Hohlraumanteil in dem zusammenhängenden Substrat (14) mit Wurzelzonen-Wachstumsmittel gefüllt ist, wobei die Wurzeln des Grases das genannte Wurzelzonen-Wachstumsmittel durchdringen, dadurch gekennzeichnet, daß die Größe der Kautschukkrume über 8 mm und nicht über 20 mm liegt, um die Wurzelzone und die Pflanzzone wirksamer hydraulisch zu verbinden.

2. Freizeitfläche nach Anspruch 1, dadurch gekennzeichnet, daß das Wurzelzonen-Wachstumsmittel Sand, Lehm, Torf oder andere organische Materialien oder Gemische davon umfaßt.

3. Freizeitfläche nach Anspruch 1 oder Anspruch 2, dadurch gekennzeichnet, daß die Schicht aus Pflanzmittel aus einem partikulären Material mit einer Dicke von bis zu 5 cm besteht.

4. Freizeitfläche nach einem der Ansprüche 1 bis 3, dadurch gekennzeichnet, daß sich das zusammenhängende Substrat (14) in einer Schicht mit einer Dicke zwischen 5 mm und 50 mm befindet.

5. Freizeitfläche nach einem der Ansprüche 1 bis 4, dadurch gekennzeichnet, daß die Kautschukkrume des genannten zusammenhängenden Substrats (14) aus SBK, EPDM, Naturkautschuk oder Gemischen davon besteht.

6. Freizeitfläche nach einem der vorherigen Ansprüche, dadurch gekennzeichnet, daß das Gras aus Samen gezogen wird.

7. Freizeitfläche nach einem der Ansprüche 1 bis 5, dadurch gekennzeichnet, daß das Gras in Soden bereitgestellt wird.

8. Freizeitfläche nach Anspruch 3, dadurch gekennzeichnet, daß das partikuläre Pflanzmittel ein handelsübliches Wurzelzonen-/Kopfdünger-Gemisch oder eine Mischung aus Sandlehm-Mutterboden und Wurzelzonensand umfaßt.

9. Freizeitfläche nach einem der vorherigen Ansprüche, dadurch gekennzeichnet, daß die Fläche die Form von fliesenartigen Einheiten hat, die nach Bedarf gehoben und verlegt werden können.

## Revendications

1. Surface de jeu comprenant de l'herbe (16) poussant sur un substrat cohérent (14) de grumeaux de caoutchouc liés ayant un volume de vide important, ledit substrat cohérent (14) reposant entre une couche (15) d'un milieu de culture au-dessus dudit substrat cohérent (14) et une couche (13) de sable de zone de racines au-dessous dudit substrat cohérent (14), dans laquelle le vide dans le substrat cohérent (14) est rempli de milieu de croissance de zone de racines, les racines de l'herbe pénétrant dans ledit milieu de croissance de zone de racines, caractérisée en ce que la taille des grumeaux de caoutchouc est supérieure à 8 mm et ne dépasse pas 20 mm afin de connecter hydrauliquement la zone de racines et la zone de culture de manière plus efficace.

2. Surface de jeu selon la revendication 1, caractérisée en ce que le milieu de croissance de zone de racines comprend du sable, du limon, de la tourbe ou un autre matériau organique ou des mélanges de ceux-ci.

3. Surface de jeu selon la revendication 1 ou la revendication 2, caractérisée en ce que la couche de milieu de culture est un matériau particulaire ayant une épaisseur allant jusqu'à 5 cm.

4. Surface de jeu selon l'une quelconque des revendications 1 à 3, caractérisée en ce que le substrat cohérent (14) est sous forme d'une couche ayant une épaisseur comprise entre 5 mm et 50 mm.

5. Surface de jeu selon l'une quelconque des revendications 1 à 4, caractérisée en ce que les grumeaux de caoutchouc dudit substrat cohérent (14) sont en caoutchouc styrène-butadiène (SBR), EPDM, caoutchouc naturel ou des mélanges de ceux-ci.

6. Surface de jeu selon l'une quelconque des revendications précédentes, caractérisée en ce qu'on fait pousser l'herbe à partir de graines.

7. Surface de jeu selon l'une quelconque des revendications 1 à 5, caractérisée en ce que l'herbe est constituée de gazons.

8. Surface de jeu selon la revendication 3, caractérisée en ce que le milieu de culture particulaire comprend un mélange zone de racines/fumure du commerce ou un mélange de terre végétale de terreau sableux et de sable de zone de racines.

9. Surface de jeu selon l'une quelconque des revendications précédentes, caractérisée en ce que la surface se présente sous la forme d'unités semblable à des carreaux qui peuvent être relevées et déposées en fonction des besoins.
